# EUROPÄISCHE PATENTSCHRIFT

(11) **EP 2 313 181 B1**
(45) Veröffentlichungstag und Bekanntmachung des Hinweises auf die Patenterteilung: **16.10.2019**
(21) Anmeldenummer: 09781719.1
(22) Anmeldetag: 12.08.2009
(51) Int. Cl.: B01D 53/94, F01N 3/20, B01D 53/90, F01N 11/00

(54) **VERFAHREN ZUR GEREGELTEN ZUGABE EINES REDUKTIONSMITTELS**
METHOD FOR THE CONTROLLED FEEDING OF A REDUCING AGENT
PROCÉDÉ PERMETTANT UNE ADDITION CONTRÔLÉE D'UN AGENT DE RÉDUCTION

(30) Priorität: 13.08.2008 DE 102008038986
(43) Veröffentlichungstag der Anmeldung: 27.04.2011
(73) Patentinhaber: CPT Group GmbH, 30165 Hannover (DE)
(72) Erfinder: HODGSON, Jan, 53840 Troisdorf (DE); BRÜCK, Rolf, 51429 Bergisch Gladbach (DE)
(86) Internationale Anmeldenummer: PCT/EP2009/060402
(87) Internationale Veröffentlichungsnummer: WO 2010/018184

(56) Entgegenhaltungen:
- EP-A- 1 203 611
- GB-A- 2 435 625
- US-A1- 2004 128 982

## Beschreibung

Die vorliegende Erfindung betrifft ein Verfahren zur geregelten Zugabe eines Reduktionsmittels zu einer Abgasbehandlungseinheit mit einer Speicherfähigkeit für einen zu reduzierenden Bestandteil des Abgases einer mobilen Verbrennungskraftmaschine. Darüber hinaus wird auch eine Vorrichtung vorgeschlagen, die zur Durchführung des hier beschriebenen Verfahrens eingerichtet ist.

Bei der Abgasnachbehandlung mobiler Verbrennungskraftmaschinen, wie beispielsweise von Magermotoren bzw. Dieselmotoren, ist es bekannt, die im Abgas enthaltenen Stickoxide (NOₓ) unter Beteiligung eines chemischen Reduktionsmittels, das vor einem Reduktionskatalysator zugegeben wird, zu reduzieren. In diesem Zusammenhang wird, gerade bei Dieselmotoren, regelmäßig ein SCR-Katalysator in der Abgasanlage vorgesehen, der mit dem Reduktionsmittel Stickoxide zu Stickstoff (N₂) und Wasser (H₂O) reduziert. Das Reduktionsmittel wird dabei direkt dem Abgas zugegeben oder es wird eine chemische Vorstufe des Reduktionsmittels zugegeben, die erst in der Abgasanlage das Reduktionsmittel freisetzt. Als Reduktionsmittel dient insbesondere Ammoniak (NH₃), das dem Abgas als Gas oder als wässrige Lösung zugeführt wird. Aufgrund des nicht ungefährlichen Umgangs mit NH₃ wird heute üblicherweise Harnstoff als chemische Vorstufe eingesetzt, der entweder in Form einer wässrigen Lösung oder als Feststoff zugegeben wird. Die thermohydrolytische Aufspaltung von Harnstoff unter Freisetzung von Ammoniak erfolgt durch die Wärme des Abgasstroms und/oder eines Hydrolysekatalysators und/oder in einem Verdampfer und/oder in einem chemischen Reaktor. Bekannte SCR-Katalysatoren sind mit Trägerstrukturen, wie beispielsweise keramische oder metallische Strukturen nach Art von Wabenkörpern, Schäumen etc., aufgebaut. Diese Trägerkörper weisen zudem eine Beschichtung auf, insbesondere so genannten Washcoat mit einer Mischung aus Vanadiumpentoxid (V₂O₅), Wolframoxid (WO₃) und Titanoxid (TiO₂). Daneben sind auch SCR-Beschichtungen bekannt, die z. B. eisenhaltige Zeolithe und/oder Edelmetalle wie Ruthenium, Rhodium, Palladium, Gold oder Platin aufweisen.

Problematisch bei der Verwendung von SCR-Katalysatoren ist, dass diese regelmäßig erst ab einer gewissen Grenztemperatur in einem relevanten Maße mit der katalytischen Umsetzung beginnen. Diese Grenztemperatur liegt bei etwa 200 °C. Zudem ist zu berücksichtigen, dass der SCR-Katalysator selbst auch eine gewisse Speicherfähigkeit für z. B. das Reduktionsmittel und/oder die Stickoxide haben kann, wobei auch diese Speicherfähigkeit regelmäßig im Hinblick auf unterschiedliche Betriebssituationen der Verbrennungskraftmaschine variiert. Diese macht insbesondere eine exakte Zugabe des Reduktionsmittels schwierig. Dabei ist auch zu berücksichtigen, dass so genannte Ammoniak-Durchbrüche vermieden werden sollen. Darunter wird insbesondere verstanden, dass eine Zudosierung nicht in dem Maße stattfinden soll, dass nicht-konvertierter Ammoniak aus dem SCR-Katalysator austritt. Bislang wurde bei entsprechenden Abgasanlagen dann sicherheitshalber ein so genannter Sperrkatalysator vorgesehen, der nach dem SCR-Katalysator angeordnet und ein edelmetallhaltiger Oxidationskatalysator ist.

Aus der US 2004/128982 A1 ist ein Verfahren zur Vermeidung von Stickstoffoxidemissionen und Ammoniakimissionen einer Abgasanlage an die Umgebung bekannt, bei dem eine Speicherfähigkeit für Stickstoffoxid und Ammoniak in den Komponenten der Abgasanlage berücksichtigt wird.

Aus der EP 1 203 611 A1 sind eine Abgasreinigungsanlage und ein Verfahren zur Abgasbehandlung mit einem SCR-Katalysator bekannt, wobei auch eine Speichereinheit zur Speicherung von Stickstoffoxidverbindungen vorhanden ist.

Aus der GB 2 435 625 A ist ein Abgassystem mit einem SCR-Katalysator bekannt, wobei der SCR-Katalysator Ammoniak speichern kann und mehrere eingebettete elektrische Heizelemente aufweist mit denen der SCR-Katalysator lokal erhitzt werden kann. Dadurch veränderter sich die lokale elektrische Leitfähigkeit des SCR-Katalysators. Diese Veränderung der elektrischen Leitfähigkeit kann mit einer Ammoniakbeladung des SCR-Katalysators korreliert werden. Somit können Informationen über die NH3-Speiccherwerte vor dem Erhitzen erhalten werden.

Hiervon ausgehend ist es Aufgabe der vorliegenden Erfindung, die mit Bezug auf den Stand der Technik geschilderten Probleme zumindest teilweise zu lösen. Insbesondere sollen ein Verfahren und eine Vorrichtung zur geregelten Zugabe eines Reduktionsmittels zu einer Abgasbehandlungseinheit mit einer Speicherfähigkeit für einen zu reduzierenden Bestandteil des Abgases einer mobilen Verbrennungskraftmaschine angegeben werden, bei denen eine möglichst vollständige Konvertierung der zu reduzierenden Bestandteile stattfindet und gleichermaßen Ammoniak-Durchbrüche vermieden werden. Dabei soll insbesondere auch eine Regelstrategie zur Zugabe flüssiger Harnstoff-Wasser-Lösung zu einem SCR-Katalysator angegeben werden, der mit einer Stickoxid-Speicherfähigkeit ausgeführt ist.

Diese Aufgaben werden gelöst mit einem Verfahren gemäß den Merkmalen des Patentanspruchs 1 sowie einer Vorrichtung gemäß den Merkmalen des Patentanspruchs 6. Weitere vorteilhafte Ausgestaltungen der Erfindung sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und gibt zusätzliche Ausführungsbeispiele an.

Das erfindungsgemäße Verfahren zur geregelten Zugabe eines Reduktionsmittels zu einer Abgasbehandlungseinheit mit einer Speicherfähigkeit für einen zu reduzierenden Bestandteil des Abgases einer mobilen Verbrennungskraftmaschine bei dem als Reduktionsmittel Harnstoff zu einer Abgasbehandlungseinheit nach Art eines SCR-Katalysators mit einer Stickoxid-Speicherfähigkeit zugegeben wird, wobei der zu reduzierende Bestandteil des Abgases Stickoxide sind und wobei weiter der SCR-Katalysator mit einer elektrischen Heizung ausgeführt ist, umfasst zumindest die folgenden Schritte:
a) Bestimmung einer Menge des von der mobilen Verbrennungskraftmaschine generierten zu reduzierenden Bestandteils des Abgases;
b) Bestimmung einer im Hinblick auf unterschiedliche Betriebssituationen der Verbrennungskraftmaschine variierenden Speicherfähigkeit der Abgasbehandlungseinheit umfassend ein Adsorptionsverhalten und Descorptionsverhalten des zu reduzierenden Bestandteils des Abgases;
c) Bestimmen einer Dosierung des Reduktionsmittels zu der Abgasbehandlungseinheit in Abhängigkeit der Schritte a) und b);
d) Zugabe des Reduktionsmittels zu der Abgasbehandlungseinheit,
wobei die Speicherfähigkeit der Abgasbehandlungseinheit (2) aktiv geregelt wird, wobei die Temperatur im Bereich der Adgasbehandlungseinheit aktiv geregelt wird.

Das Verfahren wird grundsätzlich während des Betriebes einer mobilen Verbrennungskraftmaschine durchgeführt, also wenn durch die Verbrennungskraftmaschine, insbesondere einen Dieselmotor, Abgase produziert werden. Die Regelung der Zugabe des Reduktionsmittels hat dabei das Ziel, den im Abgas enthaltenen zu reduzierenden Bestandteil mit hoher Konvertierungsrate umzusetzen. Insoweit ist die Dosierung des Reduktionsmittels an den Anteil des zu reduzierenden Bestandteils des Abgases zunächst anzupassen. Zu diesem Zweck ist in Schritt a) zunächst die Menge des zu reduzierenden Bestandteils im Abgas zu erfassen. Grundsätzlich ist möglich, dass die Menge des zu reduzierenden Bestandteils in Volumen, Massen- und/oder Gewichts-Anteilen bestimmt wird. Es ist auch möglich, dass hier neben einer sensorischen Erfassung auch eine Korrektur des erfasten Messwertes in Betracht kommt. Auch ist möglich, dass die Menge im Hinblick auf die aktuelle oder zu erwartende Last der Verbrennungskraftmaschine zu einem späteren Zeitpunkt vorbestimmt bzw. antizipiert wird. Ebenso ist möglich, dass hierbei schon berücksichtigt wird, dass sich die Zusammensetzung des Abgases in Strömungsrichtung von der Verbrennungskraftmaschine bis letztendlich hin zur betrachteten Abgasbehandlungseinheit verändern kann.

Zuvor, gleichzeitig oder nach Schritt a) kann nun die Bestimmung der aktuellen Speicherfähigkeit der Abgasbehandlungseinheit für den zu reduzierenden Bestandteil erfolgen (Schritt b)). Die Speicherfähigkeit der Abgasbehandlungseinheit kann insbesondere ein Adsorptionsverhalten des zu reduzierenden Bestandteils des Abgases umfassen, wobei dies für eine Beschichtung und/oder einen Trägerkörper der Abgasbehandlungseinheit gilt. Nur der Vollständigkeit halber sei darauf hingewiesen, dass hierbei unter Umständen auch die Speicherfähigkeit der Abgasbehandlungseinheit für das Reduktionsmittel mitbetrachtet werden kann, soweit die Abgasbehandlungseinheit ebenfalls eine Speicherfähigkeit für das Reduktionsmittel aufweist.

Aus der Erkenntnis der Speicherfähigkeit gemäß Schritt b) wird nunmehr die konkrete Dosierung des Reduktionsmittels zu der Abgasbehandlungseinheit in Abhängigkeit der beiden vorgenannten Schritte festgelegt. Die Dosierung kann sich dabei konkret auf eine oder mehrere Volumeneinheiten des Reduktionsmittels, Öffnungszeiten der Dosiereinrichtung oder dergleichen beziehen. Die Dosierung des Reduktionsmittels erfolgt dabei in der Weise, dass die aktuell reaktionsfähigen zu reduzierenden Bestandteile des Abgases mit dem Reduktionsmittel kontaktieren können, also insbesondere kein Reduktionsmittel für die aktuell in der Abgasbehandlungseinheit eingespeicherten zu reduzierenden Bestandteile eingespritzt werden, oder eine Erhöhung der Zugabe vorzunehmen, um die aus der Abgasbehandlungseinheit desorbierenden zu reduzierenden Bestandteile des Abgases umzusetzen.

Die Zugabe des Reduktionsmittels selbst gemäß Schritt d) wird regelmäßig stromaufwärts, also vor der Abgasbehandlungseinheit, stattfinden. Dabei ist weiter bevorzugt, dass die Zugabe des Reduktionsmittels in flüssiger oder gasförmiger Form erfolgt. Das Reduktionsmittel verdampft dann spätestens im Abgasstrom selbst, wobei der Abstand hin zur Abgasbehandlungseinheit auch so gewählt werden sollte, dass eine gleichmäßige Verteilung des Reduktionsmittels im Abgasstrom und damit später auch in der Abgasbehandlungseinheit sichergestellt ist.

Gemäß einer Weiterbildung des Verfahrens wird auch vorgeschlagen, dass die Menge des von der mobilen Verbrennungskraftmaschine generierten zu reduzierenden Bestandteils des Abgases in Schritt a) berechnet wird. Hierzu können insbesondere Modelle hinterlegt sein, die den Anteil des zu reduzierenden Bestandteils des Abgases in Abhängigkeit von der Last der Verbrennungskraftmaschine, der Temperatur, des Lambda-Verhältnisses, etc. vorgibt. Insoweit kann also auch bei Schritt a) auf Erfahrungswerte zurückgegriffen werden. Diese Modelle sind regelmäßig in einer Datenverarbeitungsanlage bereitgestellt und können hiermit verarbeitet werden.

Darüber hinaus wird als vorteilhaft angesehen, dass Schritt b) zumindest in Abhängigkeit der Temperatur des Abgases oder der Temperatur der Abgasbehandlungseinheit erfolgt. Gegebenenfalls kann auch vorgesehen sein, dass die Temperaturen sowohl des Abgases als auch der Abgasbehandlungseinheit zur Bestimmung der Speicherfähigkeit der Abgasbehandlungseinheit berücksichtigt werden. Vielfach ist die Speicherfähigkeit der Abgasbehandlungseinheit temperaturabhängig, wobei bei niedrigeren Temperaturen eine größere Speicherfähigkeit festzustellen ist als bei höheren Temperaturen. Insoweit wird hier vorgeschlagen, beispielsweise neben Rechenmodellen, auch auf eine konkrete Erfassung der Temperatur zurückzugreifen.

Darüber hinaus wird auch als vorteilhaft angesehen, dass Schritt b) in Abhängigkeit der Zeit nach einem Start der Verbrennungskraftmaschine erfolgt. Gerade für den Fall, wenn eine signifikante Speicherfähigkeit der Abgasbehandlungseinheit nur im Bereich kühlerer Temperaturen, beispielsweise bis 150 °C, gegeben ist und/oder in diesem Temperaturbereich nur eine signifikante Änderung der Speicherfähigkeit festzustellen ist, kann Schritt b) gegebenenfalls auch dadurch vereinfacht werden, dass Erfahrungswerte hinsichtlich der Zeit nach dem Start der Verbrennungskraftmaschine berücksichtigt werden, bis die Abgasbehandlungseinheit ihre Desorptionstemperatur erreicht hat.

Ebenfalls ist ein Verfahren bevorzugt, bei dem Schritt b) in Abhängigkeit wenigstens einer der vorausgegangenen Schritte d) erfolgt. Das heißt mit anderen Worten insbesondere, dass auch Informationen aus dem bisherigen Betrieb der Verbrennungskraftmaschine (z. B. dem Fahrverhalten oder der Umgebung) und/oder den erzielten Umsatzraten bei der Bestimmung der Dosierung des Reduktionsmittels herangezogen werden können.

Bei dem Verfahren wird als Reduktionsmittel Harnstoff zu einer Abgasbehandlungseinheit nach Art eines SCR-Katalysators mit einer Stickoxid-Speicherfähigkeit zugegeben, wobei der zu reduzierende Bestandteil des Abgases Stickoxide sind. Insbesondere wird hierbei also ein Betriebsverfahren für die Abgasanlage einer mobilen Verbrennungskraftmaschine, wie beispielsweise einem Dieselmotor, vorgeschlagen, bei dem flüssige Harnstoff-Wasser-Lösung eingegeben wird.

In diesem Zusammenhang erfolgt bei dem Verfahren das Bestimmen der Dosierung des Reduktionsmittels zu der Abgasbehandlungseinheit in Abhängigkeit einer Speicherfähigkeit für Stickoxide des SCR-Katalysators. Dabei kann eine entsprechende Abgasbehandlungseinheit zusätzlich zwischen der Dosiereinheit und dem SCR-Katalysator im Strömungsweg des Abgases vorgesehen sein, so dass hier insbesondere die Speicherfähigkeit mehrerer Abgasbehandlungseinheiten berücksichtigt wird.

Darüber hinaus wird die Speicherfähigkeit der Abgasbehandlungseinheit aktiv geregelt. Das heißt mit anderen Worten insbesondere, dass automatisch und/oder auf einen konkreten Anlass hin, gezielt auf die Speicherfähigkeit der Abgasbehandlungseinheit durch externe Maßnahmen eingewirkt wird. Dabei wird die Temperatur im Bereich der Abgasbehandlungseinheit aktiv geregelt, so dass also hier zusätzliche Maßnahmen zur Erzeugung einer Wärmeenergie bevorzugt sind. In diesem Zusammenhang wird insbesondere vorgeschlagen, dass für den Fall, dass eine Temperaturdifferenz zwischen dem Beginn des Desorptionsverhaltens der Abgasbehandlungseinheit und der katalytischen Umsetzung der zu reduzierenden Bestandteile existiert, diese besonders schnell überbrückt werden kann. Insoweit kann hier insbesondere festgestellt werden, dass dann, wenn die Desorptionstemperatur der eine Speicherfähigkeit aufweisenden Abgasbehandlungseinheit erreicht ist, die Abgasbehandlungseinheit direkt und/oder indirekt zusätzlich geheizt werden kann, bis schließlich die Temperatur zur katalytisch aktiven Umsetzung erreicht ist und somit der Heizvorgang ausgeschaltet wird. Diese Zusatzheizung kann beim Start der Verbrennungskraftmaschine und/oder in späteren Betriebsphasen eingesetzt werden, wenn die Temperatur der Abgasbehandlungseinheit in dieser Temperaturdifferenz liegt.

Gemäß einem weiteren Aspekt der Erfindung wird auch eine Vorrichtung umfassend zumindest eine Verbrennungskraftmaschine mit einer Abgasanlage vorgeschlagen, die von einem Abgas der Verbrennungskraftmaschine in einer Strömungsrichtung durchströmbar ist und in der zumindest eine Abgasbehandlungseinheit mit einer Speicherfähigkeit für einen zu reduzierenden Bestandteil des Abgases vorgesehen ist und die Abgasanlage weiter eine Dosiereinheit zur Abgabe eines Reduktionsmittels hin zur Abgasbehandlungseinheit aufweist, wobei die Dosiereinheit zusammen mit einer Kontrolleinheit eingerichtet ist, um das hier erfindungsgemäß beschriebene Verfahren durchzuführen.

Insoweit kann hinsichtlich der Funktionen und Betriebsweisen der einzelnen hier aufgeführten Komponenten auf die vorherigen Erläuterungen verwiesen werden. Nur der Vollständigkeit halber soll hier erläutert werden, dass die Abgasanlage selbstverständlich weitere Abgasbehandlungseinheiten umfassen kann. Bei der Verbrennungskraftmaschine handelt es sich insbesondere um einen Magermotor oder einen Dieselmotor. Das Abgas strömt ausgehend von der Verbrennungskraftmaschine durch die mindestens eine Abgasbehandlungseinheit in die Umgebung, wobei diese Strömung die Strömungsrichtung vorgibt. Die Dosiereinheit umfasst insbesondere ein Reservoir für das (insbesondere flüssige) Reduktionsmittel, eine Zuleitung hin zu einem Ventil bzw. einer Düse der Abgasanlage sowie gegebenenfalls dazwischen liegende Pumpen, Sensoren, Ventile, Rückführleitungen, chemische Reaktoren, Erhitzer etc. Die Kontrolleinheit ist insbesondere nach Art einer Datenerfassungs- und/oder Datenverarbeitungsanlage eingerichtet. Die Kontrolleinheit kann auch Teil einer größeren Anlage sein, wie beispielsweise der Motorsteuerung.

Bei der Vorrichtung ist die zumindest eine Abgasbehandlungseinheit ein SCR-Katalysator mit einer Stickoxid-Speicherfähigkeit und die Dosiereinheit mit einer Harnstoff-Wasser-Lösung-Versorgung verbunden. In diesem Fall kann das Verfahren insbesondere zur selektiven katalytischen Reduktion von Stickoxiden im Abgas von Dieselmotoren eingesetzt werden. Als Reduktionsmittel kommt hierbei eine flüssige Harnstoff-Wasser-Lösung zum Einsatz, die in flüssiger Form oder in (teilweise) dampfförmiger Form dem Abgas zugegeben wird. Auch wenn grundsätzlich möglich ist, den Harnstoff vor Einleiten in die Abgasanlage zu hydrolisieren, wird hier vorgeschlagen, dies erst im Abgasstrom zu bewirken, gegebenenfalls auch unter Einsatz eines entsprechenden Katalysators. In vielen Fällen wird es jedoch genügen, wenn die Harnstoff-Wasser-Lösung feinverteilt in das Abgas zugegeben wird, so dass dort eine Thermolyse unter Abspaltung von Ammoniak stattfindet.

In diesem Zusammenhang ist der SCR-Katalysator mit einer elektrischen Heizung ausgeführt. Grundsätzlich ist möglich, dass der SCR-Katalysator mit einem keramischen und/oder einem metallischen Trägerkörper gebildet ist. Hier können gleichwohl Heizelemente eingearbeitet sein, die in Folge einer Ohmschen Widerstandserwärmung aktiv regelbar mit Strom zu beaufschlagen sind, so dass zu konkret vorgegebenen Zeitpunkten Wärme erzeugt werden kann.

Außerdem wird auch als vorteilhaft angesehen, dass die Abgasbehandlungseinheit wenigstens einen Sensor zur direkten Bestimmung der Temperatur einer katalytisch aktiven Beschichtung aufweist. Hierzu ist insbesondere ein Sensor vorgesehen, der zwischen dem Trägerkörper und der darauf applizierten Beschichtung angeordnet ist. Damit lassen sich besonders genaue Erkenntnisse zur Temperatur der katalytisch aktiven Beschichtung und damit auch auf deren Speicherfähigkeit gewinnen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: den Aufbau eines Kraftfahrzeugs mit einer erfindungsgemäßen Vorrichtung,
- Fig. 2:: ein Detail einer Abgasbehandlungseinheit zur Erläuterung der Vorgänge während des Betriebes, und
- Fig. 3:: ein Ablaufdiagramm zur Veranschaulichung des Verfahrens.

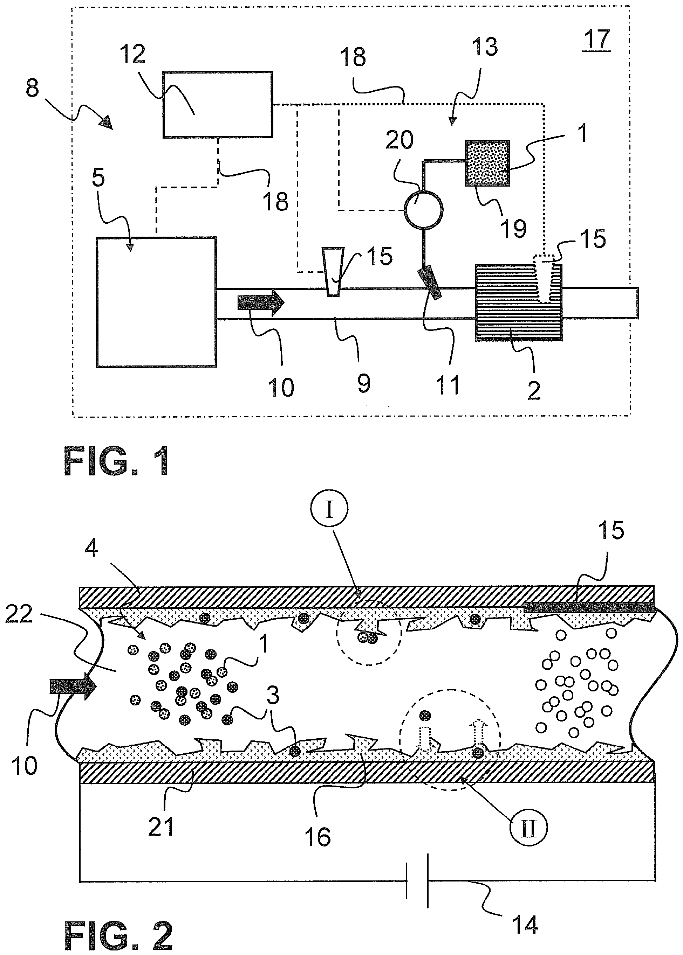

Die Fig. 1 zeigt eine Vorrichtung 1 mit einer Verbrennungskraftmaschine 5 nach Art eines Dieselmotors, an die sich eine Abgasanlage 9 anschließt. Das in der Verbrennungskraftmaschine 5 erzeugte Abgas strömt dann in Strömungsrichtung 10 durch die Abgasanlage 9 hindurch. Dabei trifft es auf die Abgasbehandlungseinheit 2 nach Art eines SCR-Katalysators mit einer Stickoxid-Speicherfähigkeit.

Zwischen der Verbrennungskraftmaschine 5 und der Abgasbehandlungseinheit 2 ist eine Dosiereinheit 11 zur Zugabe eines Reduktionsmittels 1 (Harnstoff-Wasser-Lösung) vorgesehen. Zwischen der Dosiereinheit 11 und der Abgasbehandlungseinheit 2 sind hier keine weiteren Komponenten der Abgasanlage 9 vorgesehen, dies muss aber nicht so sein. Die Dosiereinheit 11 wirkt dabei mit einer Harnstoff-Wasser-Lösungs-Versorgung 13 zusammen. Diese Harnstoff-Wasser-Lösungs-Versorgung 13 umfasst einen Tank 19 zur Bevorratung des Reduktionsmittels 1. Über die Pumpe 20, die gegebenenfalls von einer Kontrolleinheit 12 betrieben bzw. geregelt wird, wird das Reduktionsmittel 1 hin zur Dosiereinheit 11, z. B. nach Art eine Düse und/oder eines Ventils, zeitgenau gefördert.

Diese Vorrichtung 8 ist dabei in einem Kraftfahrzeug 17 verwirklicht. Im Hinblick auf den Betrieb des Kraftfahrzeugs 17 bzw. der Vorrichtung 8 kann festgestellt werden, dass durch die Überwachung der Abgasanlage 9 über Sensoren 15 und/oder die Überwachung der Abgasbehandlungseinheit 2 durch Sensoren 15 und/oder der Überwachung der Prozesse in der Verbrennungskraftmaschine 5 Informationen gewonnen werden können, um insbesondere die Menge des von der mobilen Verbrennungskraftmaschine 5 generierten Stickoxids im Abgas und/oder die Speicherfähigkeit der Abgasbehandlungseinheit für Stickoxide zu bestimmten. Die entsprechenden Daten, Messwerte und/oder Informationen werden über geeignete Leitungen 18 der gemeinsamen Kontrolleinheit 12 zugeführt. Dort wird dann die Dosierung des Reduktionsmittels 1 anhand der gewonnenen Informationen festgelegt, wobei durch eine entsprechende Ansteuerung der Pumpe 20 und/oder der Dosiereinheit 11 eine gezielte Zugabe des Reduktionsmittels zu der Abgasbehandlungseinheit 2 ermöglicht wird.

Zur Veranschaulichung der Vorgänge im Inneren der Abgasbehandlungseinheit 2 soll Fig. 2 dienen. Dargestellt ist hierbei ein einzelner Kanal 22 der Abgasbehandlungseinheit 2. Der Kanal 22 ist durch die Wandung eines Trägerkörpers 21 begrenzt. Auf der Oberfläche dieses Trägerkörpers 21 ist zusätzlich eine katalytisch aktive Beschichtung 16 vorgesehen. Hierbei handelt es sich um eine SCR-Beschichtung. Das in Strömungsrichtung 10 in den Kanal 22 einströmende Abgas 4 weist nunmehr bereits ein Gemisch aus dem Reduktionsmittel 1 und dem zu reduzierenden Bestandteil 3 des Abgases 4 auf, wobei der zu reduzierende Bestandteil Stickoxide sind.

Wie in dem Ausschnitt in Fig. 2 gezeigt, der mit "I" bezeichnet ist, reagieren nun das Reduktionsmittel und der zu reduzierende Bestandteil in Anwesenheit der Beschichtung 16 miteinander, so dass die Stickoxide in elementaren Stickstoff und Wasser umgewandelt werden. Im Fall, wie er hier beschrieben ist, dass die Abgasbehandlungseinheit jedoch eine Speicherfähigkeit für diese zu reduzierenden Bestandteile 3 hat, wird zumindest ein Teil der zu reduzierenden Bestandteile 3 des Abgases adsorbiert, bzw. bereits adsorbierte Teile desorbieren wieder. Dies wird durch das mit "II" gekennzeichnete Detail veranschaulicht.

Wird von der Abgasbehandlungseinheit zum aktuellen Zeitpunkt vorrangig der zu reduzierende Bestandteil gespeichert, besteht die Gefahr, dass zuviel Reduktionsmittel im Abgas mitgeführt wird, so dass dieses ohne Konvertierung die Abgasbehandlungseinheit wieder verlassen könnte. Im umgekehrten Fall, also wenn der bislang gespeicherte zu reduzierende Bestandteil wieder desorbiert, könnte zuwenig Reduktionsmittel 1 zur Reaktion zur Verfügung stehen, womit die Stickoxide die Abgasbehandlungseinheit verlassen könnten. Genau hier schafft die Erfindung eine Lösung, weil sie das Adsorptions- und/oder Desorptionsverhalten der zu reduzierenden Bestandteile im Hinblick auf die Speicherfähigkeit der Abgasbehandlungseinheit berücksichtigt.

Um nunmehr detaillierte Auskünfte zur aktuellen Speicherfähigkeit der Abgasbehandlungseinheit 2 zu gewinnen, kann ein Sensor 15, beispielsweise zwischen der Beschichtung 16 und dem Trägerkörper 21, vorgesehen sein. Darüber hinaus wird das Desorptionsverhalten der Beschichtung 16 und/oder deren katalytische Aktivität dadurch aktiv geregelt, dass eine elektrische Heizung 14 vorgesehen ist, mit der die Trägerstruktur 21 erwärmt werden kann.

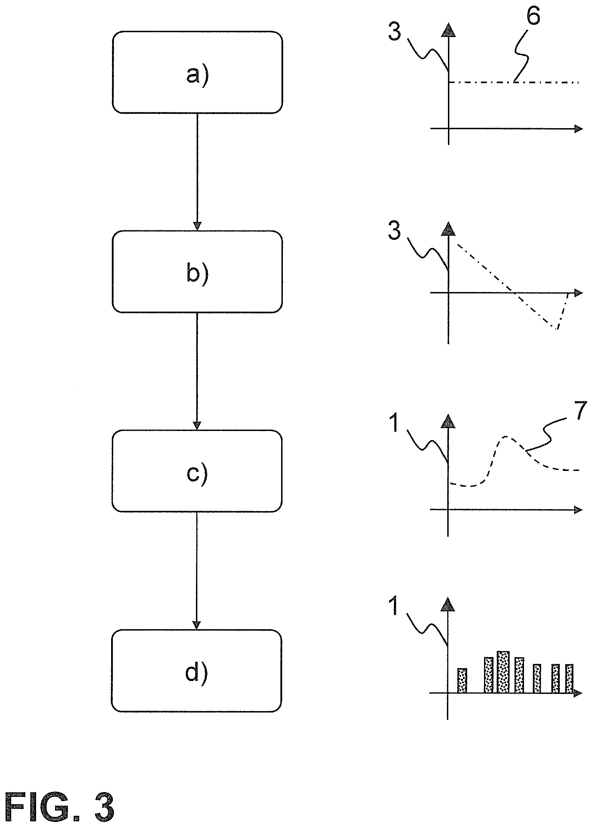

Fig. 3 veranschaulicht nunmehr die einzelnen Schritte des Verfahrens. Dabei dient das hier beschriebene Verfahren zur geregelten Zugabe einer Harnstoff-Wasser-Lösung zu einer Abgasbehandlungseinheit nach Art eines SCR-Katalysators mit einer Speicherfähigkeit für Stickoxide. Dabei wird zunächst gemäß Schritt a) die Menge 6 des von der mobilen Verbrennungskraftmaschine (z. B. Dieselmotor) generierten Stickoxidanteils bestimmt. Hier wird dargestellt, dass dieser Bedarf nun für einen gewissen Zeitraum im Wesentlichen konstant ist. Klar ist, dass dies keine realistische Fahrsituation reflektiert, der Einfachheit halber soll dies an dieser Stelle aber genügen.

Ist diese Menge 6 bestimmt, kann anschließend oder auch schon parallel dazu die Speicherfähigkeit der Abgasbehandlungseinheit für die Stickoxide bestimmt werden (Schritt b)). Dem Diagramm rechts kann entnommen werden, dass die Speicherfähigkeit für den zu reduzierenden Bestandteil 3 (Stickoxide) über die Zeit, z. B. nach einem Start der Verbrennungskraftmaschine, sinkt, wobei zunächst eine Aufnahme des zu reduzierenden Bestandteils 3 möglich ist und die Stickoxide später dann wieder abgegeben werden, bis sich im Wesentlichen ein Gleichgewicht hinsichtlich adsorbierender und desorbierender zu reduzierender Bestandteile 3 ergibt. Jedenfalls wird hier für den aktuellen Zeitpunkt die Speicherfähigkeit bestimmt.

Gemäß Schritt c) wird nun die Dosierung 7 des Reduktionsmittels 1, also der Harnstoff-Wasser-Lösung, bestimmt. Aus dem entsprechenden Diagramm kann entnommen werden, dass zu Beginn, wenn also eine verstärkte Adsorption festzustellen ist, die Dosierung 7 relativ gering gehalten wird, weil ein Teil der zu reduzierenden Bestandteile für das Reduktionsmittel 1 unerreichbar gespeichert wird. Dann, wenn die Desorption beginnt, ist eine größere Dosierung 7 des Reduktionsmittels 1 vorzunehmen, weil zusätzlich zu der Menge 6 des von der mobilen Verbrennungskraftmaschine generierten zu reduzierenden Bestandteils des Abgases der desorbierte Anteil nun mit Reduktionsmittel 1 umgesetzt werden muss. Zum Zeitpunkt des Gleichgewichts zwischen Adsorption und Desorption kann, eine konstante Menge 6 in Schritt a) vorausgesetzt, auch eine im Wesentlichen konstante Dosierung 7 veranschlagt werden.

Die Zugabe des Reduktionsmittels 1 gemäß Schritt d) kann insbesondere anhand verschiedener Portionen erfolgen, wobei die portionierte Menge, die Häufigkeit der Zugabe und Ähnliches an die konstruktive Ausgestaltung der Dosiereinrichtung anzupassen ist. Auch kann der Aggregatszustand des Reduktionsmittels 1 Einfluss auf die Art oder den Umfang der Portionen nehmen.

### Bezugszeichenliste

- 1: Reduktionsmittel
- 2: Abgasbehandlungseinheit
- 3: zu reduzierender Bestandteil
- 4: Abgas
- 5: Verbrennungskraftmaschine
- 6: Menge
- 7: Dosierung
- 8: Vorrichtung
- 9: Abgasanlage
- 10: Strömungsrichtung
- 11: Dosiereinheit
- 12: Kontrolleinheit
- 13: Harnstoff-Wasser-Lösung-Versorgung
- 14: Heizung
- 15: Sensor
- 16: katalytisch aktive Beschichtung
- 17: Kraftfahrzeug
- 18: Leitung
- 19: Tank
- 20: Pumpe
- 21: Trägerkörper
- 22: Kanal

## Patentansprüche

1. Verfahren zur geregelten Zugabe eines Reduktionsmittels (1) zu einer Abgasbehandlungseinheit (2) mit einer Speicherfähigkeit für einen zu reduzierenden Bestandteil (3) des Abgases (4) einer mobilen Verbrennungskraftmaschine (5), bei dem als Reduktionsmittel (1) Harnstoff zu einer Abgasbehandlungseinheit (2) nach Art eines SCR-Katalysators mit einer Stickoxid-Speicherfähigkeit zugegeben wird, wobei der zu reduzierende Bestandteil (3) des Abgases (4) Stickoxide sind und wobei weiter der SCR-Katalysator mit einer elektrischen Heizung (14) ausgeführt ist, umfassend zumindest die folgenden Schritte:
a) Bestimmung einer Menge (6) des von der mobilen Verbrennungskraftmaschine (5) generierten zu reduzierenden Bestandteils (3) des Abgases (4);
b) Bestimmung einer im Hinblick auf unterschiedliche Betriebssituationen der Verbrennungskraftmaschine variierenden Speicherfähigkeit der Abgasbehandlungseinheit (2) umfassend ein Adsorptionsverhalten und Desorptionsverhalten des zu reduzierenden Bestandteils (3) des Abgases (4);
c) Bestimmen einer Dosierung (7) des Reduktionsmittels (1) zu der Abgasbehandlungseinheit (2) in Abhängigkeit der Schritte a) und b);
d) Zugabe des Reduktionsmittels (1) zu der Abgasbehandlungseinheit (2);
wobei die Speicherfähigkeit der Abgasbehandlungseinheit (2) aktiv gergelt wird, wobei die Temperatur im Bereich der Abgasbehandlungseinheit aktiv geregelt wird.

2. Verfahren nach Patentanspruch 1, bei dem die Menge (6) des von der mobilen Verbrennungskraftmaschine (5) generierten zu reduzierenden Bestandteils (3) des Abgases (4) in Schritt a) berechnet wird.

3. Verfahren nach Patentanspruch 1 oder 2, bei dem Schritt b) zumindest in Abhängigkeit der Temperatur des Abgases (4) oder der Temperatur der Abgasbehandlungseinheit (2) erfolgt.

4. Verfahren nach einem der vorhergehenden Patentansprüche, bei dem Schritt b) in Abhängigkeit der Zeit nach einem Start der Verbrennungskraftmaschine (5) erfolgt.

5. Verfahren nach einem der vorhergehenden Patentansprüche, bei dem Schritt b) in Abhängigkeit wenigstens einer der vorausgegangenen Schritte d) erfolgt.

6. Vorrichtung (8) umfassend zumindest eine Verbrennungskraftmaschine (5) mit einer Abgasanlage (9), die von einem Abgas (4) der Verbrennungskraftmaschine (5) in einer Strömungsrichtung (10) durchströmbar ist und in der zumindest eine Abgasbehandlungseinheit (2) mit einer Speicherfähigkeit für einen zu reduzierenden Bestandteil (3) des Abgases (4) vorgesehen ist, und die Abgasanlage (9) weiter eine Dosiereinheit (11) zur Zugabe eines Reduktionsmittels (1) hin zur Abgasbehandlungseinheit (2) aufweist, wobei die zumindest eine Abgasbehandlungseinheit (2) ein SCR-Katalysator mit einer Stickoxid-Speicherfähigkeit ist und die Dosiereinheit (11) mit einer Harnstoff-Wasser-Lösung-Versorgung (13) verbunden ist, wobei weiter der SCR-Katalysator mit einer elektrischen Heizung (14) ausgeführt ist und wobei die Dosiereinheit (11) zusammen mit einer Kontrolleinheit (12) eingerichtet sind, um das Verfahren nach einem der vorhergehenden Patentansprüche durchzuführen.

7. Vorrichtung (8) nach Patentanspruch 6, bei der die Abgasbehandlungseinheit (2) wenigstens einen Sensor (15) zur direkten Bestimmung der Temperatur einer katalytisch aktiven Beschichtung (16) aufweist.

## Claims

1. Method for the controlled feeding of a reducing agent (1) into an exhaust gas treatment unit (2) with a storage capability for a component (3) of the exhaust gas (4) which is to be reduced from a mobile internal combustion engine (5), in which urea is fed in as reducing agent (1) to an exhaust gas treatment unit (2) of an SCR catalytic converter type with a nitrogen oxide storage capability, the component (3) of the exhaust gas (4) which is to be reduced being nitrogen oxides and furthermore the SCR catalytic converter being designed with an electric heater (14), comprising at least the following steps:
a) determination of a quantity (6) of the component (3) of the exhaust gas (4) which is generated by the mobile internal combustion engine (5) and is to be reduced;
b) determination of a storage capability, which varies in respect of different operating situations of the internal combustion engine, of the exhaust gas treatment unit (2), comprising an adsorption behavior and desorption behavior of the component (3) of the exhaust gas (4) which is to be reduced;
c) determination of metering (7) of the reducing agent (1) into the exhaust gas treatment unit (2) as a function of the steps a) and b); and
d) feeding of the reducing agent (1) into the exhaust gas treatment unit (2);
the storage capability of the exhaust gas treatment unit (2) being controlled actively, the temperature in the region of the exhaust gas treatment unit being controlled actively.

2. Method according to Patent Claim 1, in which the quantity (6) of the component (3) of the exhaust gas (4) which is to be reduced that is generated by the mobile internal combustion engine (5) is calculated in step a).

3. Method according to Patent Claim 1 or 2, in which step b) is carried out at least as a function of the temperature of the exhaust gas (4) or the temperature of the exhaust gas treatment unit (2).

4. Method according to one of the preceding patebt claims, in which step b) is carried out as a function of the time after a start of the internal combustion engine (5).

5. Method according to one of the preceding patent claims, in which step b) is carried out as a function of at least one of the preceding steps d).

6. Device (8) comprising at least one internal combustion engine (5) with an exhaust gas system (9), through which an exhaust gas (4) from the internal combustion engine (5) can flow in a flow direction (10), and in which at least one exhaust gas treatment unit (2) with a storage capability for a component (3) of the exhaust gas (4) which is to be reduced is provided, and the exhaust gas system (9) further has a metering unit (11) for feeding a reducing agent (1) to the exhaust gas treatment unit (2), the at least one exhaust gas treatment unit (2) being an SCR catalytic converter with a nitrogen oxide storage capability, and the metering unit (11) being connected to a urea-water solution supply (13), furthermore the SCR catalytic converter being designed with an electric heater (14) and the metering unit (11), together with a control unit (12), being set up to implement the method according to one of the preceding patent claims.

7. Device (8) according to Patent Claim 6, in which the exhaust gas treatment unit (2) has at least one sensor (15) for the direct determination of the temperature of a catalytically active coating (16).

## Revendications

1. Procédé permettant une addition contrôlée d'un agent de réduction (1) à une unité de traitement de gaz d'échappement (2), comprenant une capacité de stockage pour un constituant à réduire (3) du gaz d'échappement (4) d'un moteur à combustion interne mobile (5), dans lequel on ajoute de l'urée en tant qu'agent de réduction (1) à une unité de traitement de gaz d'échappement (2) de type catalyseur RCS avec une capacité de stockage des oxydes d'azote, le constituant à réduire (3) du gaz d'échappement (4) étant constitué par des oxydes d'azote et le catalyseur RCS étant en outre réalisé avec un chauffage électrique (14), le procédé comprenant au moins les étapes suivantes :
a) détermination d'une quantité (6) du constituant à réduire (3) du gaz d'échappement (4) généré par le moteur à combustion interne mobile (5) ;
b) détermination d'une capacité de stockage de l'unité de traitement de gaz d'échappement (2), variant en fonction de situations de fonctionnement différentes du moteur à combustion interne, comprenant un comportement d'adsorption et un comportement de désorption du constituant à réduire (3) du gaz d'échappement (4) ;
c) détermination d'un dosage (7) de l'agent de réduction (1) ajouté à l'unité de traitement de gaz d'échappement (2) en fonction des étapes a) et b) ;
d) addition de l'agent de réduction (1) à l'unité de traitement de gaz d'échappement (2) ;
la capacité de stockage de l'unité de traitement de gaz d'échappement (2) étant régulée de manière active, la température dans la plage de l'unité de traitement de gaz d'échappement étant régulée de manière active.

2. Procédé selon la revendication 1, dans lequel la quantité (6) du constituant à réduire (3) du gaz d'échappement (4) généré par le moteur à combustion interne mobile (5) est calculée à l'étape a).

3. Procédé selon la revendication 1 ou 2, dans lequel l'étape b) s'effectue au moins en fonction de la température du gaz d'échappement (4) ou de la température de l'unité de traitement de gaz d'échappement (2).

4. Procédé selon l'une quelconque des revendications précédentes, dans lequel l'étape b) s'effectue en fonction du temps après un départ du moteur à combustion interne (5) .

5. Procédé selon l'une quelconque des revendications précédentes, dans lequel l'étape b) s'effectue en fonction d'au moins l'une des étapes précédentes d).

6. Dispositif (8) comprenant au moins un moteur à combustion interne (5) comprenant une installation de gaz d'échappement (9) qui peut être parcourue par un gaz d'échappement (4) du moteur à combustion interne (5) dans une direction d'écoulement (10) et dans laquelle au moins une unité de traitement de gaz d'échappement (2) avec une capacité de stockage pour un constituant à réduire (3) du gaz d'échappement (4) est prévue, et l'installation de gaz d'échappement (9) présente en outre une unité de dosage (11) pour l'addition d'un agent de réduction (1) à l'unité de traitement de gaz d'échappement (2), l'au moins une unité de traitement de gaz d'échappement (2) étant un catalyseur RCS avec une capacité de stockage des oxydes d'azote et l'unité de dosage (11) étant connectée à une alimentation en solution d'urée aqueuse (13), le catalyseur RCS étant en outre réalisé avec un chauffage électrique (14), l'unité de dosage (11), conjointement avec une unité de contrôle (12), étant prévues pour mettre en oeuvre le procédé selon l'une quelconque des revendications précédentes.

7. Dispositif (8) selon la revendication 6, dans lequel l'unité de traitement de gaz d'échappement (2) présente au moins un capteur (15) pour déterminer directement la température d'un revêtement catalytiquement actif (16).
